(19) **Europäisches Patentamt**
**European Patent Office**
**Office européen des brevets**

(11) **EP 1 267 300 B1**

(12) **FASCICULE DE BREVET EUROPEEN**

(45) Date de publication et mention
de la délivrance du brevet:
**16.12.2009 Bulletin 2009/51**

(51) Int Cl.:
*G06K 9/36* (2006.01)     *G01N 21/88* (2006.01)

(21) Numéro de dépôt: **02291285.1**

(22) Date de dépôt: **27.05.2002**

(54) **Procédé de reconnaissance d'empreintes digitales par coloration et système informatique pour mettre en oeuvre ledit procédé**

Verfahren zur Fingerabdruckerkennung durch Färbung und Rechnersystem zum Ausführung dieses Verfahrens

Method for fingerprint recognition by colorisation and computer system for carrying out said method

(84) Etats contractants désignés:
**DE GB**

(30) Priorité: **13.06.2001 FR 0107745**

(43) Date de publication de la demande:
**18.12.2002 Bulletin 2002/51**

(73) Titulaire: **SAGEM Sécurité**
**75015 Paris (FR)**

(72) Inventeur: **Bornes, Luc**
**95000 Cergy (FR)**

(74) Mandataire: **Loisel, Bertrand**
**Cabinet Plasseraud**
**52 rue de la Victoire**
**75440 Paris Cedex 09 (FR)**

(56) Documents cités:
**WO-A-01/11545     US-A- 4 607 384**
**US-A- 5 194 746**

• JAGADEESH J M: "IMAGE PROCESSING SOFTWARE IMAGE-PRO PLUS 1.2" COMPUTER, IEEE COMPUTER SOCIETY, LONG BEACH., CA, US, US, vol. 27, no. 9, 1 septembre 1994 (1994-09-01), pages 102-104, XP000475943 ISSN: 0018-9162

**Description**

Le domaine de l'invention est celui de la reconnaissance d'empreintes digitales.

La reconnaissance d'empreintes digitales est couramment utilisée pour identifier une personne en fonction de ses empreintes digitales.

Une base de données d'empreintes digitales répertorie généralement une multitude d'images d'empreintes digitales avec pour chacun un ensemble de points caractéristiques et une correspondance avec une identité de personne à qui est attribuée l'empreinte digitale.

Une image d'empreinte digitale est constituée d'un certain nombre de lignes plus ou moins sombres séparées par des lignes plus ou moins claires avec des fins de lignes et des bifurcations de lignes qui constituent les points caractéristiques de l'empreinte digitale.

Pour établir une correspondance univoque entre une image qui résulte d'un relevé d'empreinte d'identité inconnue et une image d'empreinte de la base de données, on procède globalement de la façon suivante. L'image d'empreinte inconnue est présentée à un spécialiste qui détermine des points caractéristiques de l'empreinte inconnue. L'image d'empreinte inconnue avec ses points caractéristiques déterminés, est soumise à un système informatique qui la compare aux images avec leurs points caractéristiques de la base de données. Le système informatique retient parmi les images de la base de données, un échantillon de celles qu'un algorithme juge de façon connue, les plus proches de l'image soumise. Les images retenues par le système informatique sont ensuite présentées au spécialiste qui les compare avec l'image d'empreinte inconnue de façon à retrouver une correspondance de l'image d'empreinte inconnue avec une image d'empreinte de la base de données.

Sur une image, disponible avec différents niveaux dans une échelle de gris pour montrer les sillons d'une empreinte digitale, la distribution entre lignes claires et lignes sombres est parfois difficile à apprécier. De façon à soulager l'effort du spécialiste dans son tri parmi les images d'un échantillon présenté, le système informatique est généralement prévu pour retenir un échantillon contenant un nombre limité d'images.

Pour ce faire, certaines images sont écartées dès que leur similitude avec l'Image soumise s'éloigne, même peu de celle-ci. Ceci présente un inconvénient car des images pertinentes risquent d'être écartées, au risque de ne pas présenter au spécialiste l'image d'empreinte digitale qui correspond réellement à celle de l'image soumise. Le spécialiste dépense alors une énergie inutile pour observer un échantillon qui ne contient pas l'Image recherchée.

D'autre part, la difficulté à apprécier avec exactitude un passage de ligne sombre à ligne claire peut générer des erreurs de détection et/ou de positionnement de points caractéristiques sur l'image d'empreinte inconnue. Le système informatique comportant ensuite des points caractéristiques de l'empreinte inconnue à ceux d'une base de données, risque d'écarter une empreinte de base de données pertinente à cause de ces erreurs. Avant de soumettre l'Image d'empreinte digitale avec ses points caractéristiques au système informatique, le spécialiste doit donc présenter une attention soutenue à l'analyse de l'empreinte Inconnue pour déterminer les points caractéristiques en minimisant les risques d'erreurs.

Augmenter la taille de l'échantillon avec des contraintes de comparaison plus faibles, diminue le risque d'écarter l'image pertinente. Cependant, une scrutation d'un nombre considérablement élevé d'images affichés avec des niveaux dans une échelle de gris, augmente la fatigue du spécialiste et risque de diminuer sa productivité.

On connait les documents « Image Processing Software Image-Pro plus 1.2 » de Computer IEEE Computer Society et le brevet US 5,194,746 (COEN GUENTHER) qui proposent un système capable de modifier une image en niveaux de gris en une image en niveaux de couleur. Toutefois, ces systèmees ne sont pas adaptés à la reconnaissance d'empreintes digitales.

De façon à faciliter la tâche du spécialiste, un premier objet de l'invention est un procédé de reconnaissance d'empreintes digitales comprenant une étape de transformation dans laquelle une première image d'empreinte disponible avec différents niveaux dans une échelle de gris est modifiée en une deuxième image représentant la première image, dans laquelle au moins une plage de gris de la première image est paramétrée de façon à être représentée avec différents niveaux dans une échelle de couleur.

Ceci permet d'augmenter la perception des variations de luminosité et contraste dans la plage de gris transformé et de mieux distinguer les détails de cette plage de gris par rapport au reste de l'image.

Ainsi, dans une étape d'analyse du procédé, dans laquelle le spécialiste analyse des points caractéristiques d'une image d'empreinte digitale de façon à pouvoir identifier l'empreinte digitale dont l'image lui est présentée, l'attention du spécialiste peut se porter sur les parties colorées avec un moindre effort.

L'augmentation de contraste apportée par les couleurs permet au spécialiste de déterminer plus précisément les points caractéristiques de l'empreinte digitale inconnue avant d'en soumettre l'image au système informatique pour comparaison avec des images de base de données. Ceci augmente les performances de comparaison du système informatique par réduction du taux d'erreurs.

Il est alors plus facilement possible de garder des contraintes fortes de comparaison et de réduire ainsi la taille de l'échantillon retenu par le système informatique.

Dans une phase de sélection finale de l'empreinte digitale de l'échantillon par le spécialiste, sa tâche est facilitée par la taille raisonnable de l'échantillon, combinée à l'affichage rehaussé par les couleurs, des empreintes digitales présentées.

Le procédé est encore amélioré en attribuant d'autres couleurs à d'autres plages de gris.

Un autre objet de l'invention est un système informatique qui comprend des moyens pour afficher une image d'empreinte digitale et des moyens pour transformer chaque niveau dans une plage de variation de gris en un niveau dans une plage de variation de couleur.

D'autres particularités et avantages de la présente invention apparaissent dans la description d'exemples de réalisation présentés à titre illustratif, en référence aux dessins annexés, sur lesquels :

- la figure 1 représente un système informatique conforme à l'invention ;
- la figure 2 représente différentes étapes d'un procédé conforme à l'invention ;
- la figure 3a met en évidence le pouvoir séparateur de l'oeil pour une image codée sur différents niveaux de gris ;
- les figures 3b et 3c mettent en évidence le pouvoir séparateur de l'oeil pour une image transformée selon le procédé conforme à l'invention.

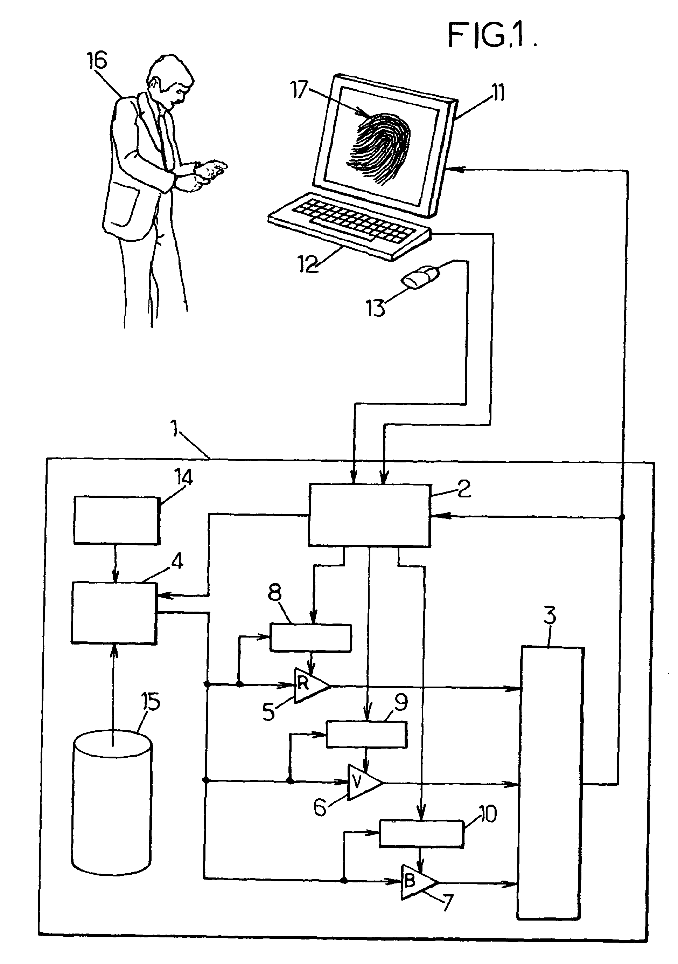

En référence à la figure 1, un système informatique 1 comprend un interpréteur de commandes 2 et un pilote d'affichage 3. Des moyens d'interface opérateur permettent à un être humain 16 d'interagir avec le système informatique 1. Les moyens d'interface opérateur comprennent des moyens de commande tels qu'un clavier 12, une souris 13 et des moyens d'affichage tels qu'un écran 11.

L'interpréteur de commandes 2 est prévu pour recevoir en entrée des premiers signaux qui proviennent des moyens de commande. Le pilote d'affichage 3 est prévu pour générer de façon connue, des deuxièmes signaux à destination des moyens d'affichage. Une image affichée sur l'écran 11 est constituée d'une mosaïque de points élémentaires nommés communément pixels. L'écran 11 étant un écran couleur, la lumière émise par chaque pixel a de façon connue, une intensité codée sur trois valeurs. Dans un espace de couleur teinte, saturation, luminance, la teinte varie du rouge orangé au rouge violacé en passant par le jaune, le bleu turquoise, le magenta, la saturation varie du gris commun à toutes les teintes aux valeurs les plus vives qui tranchent nettement d'une teinte à l'autre, la luminance varie du noir (absence de lumière) au blanc (pleine lumière). Ainsi, pour une image noir et blanc en nuances de gris, la saturation est nulle, les valeurs de teinte sont sans influences sur la perception de l'oeil, une valeur nulle de luminance fait percevoir le noir, une valeur maximale de luminance fait percevoir le blanc, entre les valeurs extrêmes de luminance, chaque valeur fait percevoir un niveau dans une échelle de gris.

Dans un espace de couleurs Rouge-Vert-Bleu, une intensité nulle de lumière émise dans les trois couleurs Rouge, Verte et Bleue donne à l'oeil la même perception de noir que dans l'espace teinte, saturation, luminance, une intensité maximale de lumière émise dans les trois couleurs Rouge, Verte et Bleue donne à l'oeil la même perception de blanc que dans l'espace teinte, saturation, luminance. Une intensité maximale de lumière émise dans la couleur rouge avec une intensité nulle dans les couleurs vertes et bleues donne à l'oeil la même perception que la teinte rouge dite orangée ou violacée avec une valeur de saturation maximale et une valeur de luminance sensiblement médiane dans l'espace teinte, saturation, luminance. L'ensemble des couleurs de l'espace teinte, saturation, luminance peut être obtenu avec des valeurs d'intensité de lumière émise dans chacune des couleurs Rouge, Verte et Bleue.

Chaque pixel de l'écran 11 comprend un nombre égal de points lumineux à intensité variable pour chacune des couleurs Rouge, Verte et Bleue. De façon connue dans le domaine des écrans électroluminescents couleur, les deuxièmes signaux générés par le pilote d'affichage 3 codent des valeurs d'intensité lumineuse dans chacune des trois couleurs en synchronisation avec un balayage de l'écran 11.

Un producteur d'image 4 est prévu pour produire des images d'empreintes digitales à partir d'une base de données 15 ou d'un dispositif d'entrée 14.

La base de données 15 contient des images d'empreintes digitales codées numériquement dans une échelle de gris dont différents niveaux du plus clair au plus sombre permettent de représenter des lignes d'empreinte digitale.

Le producteur d'image 4 est agencé pour extraire une ou plusieurs images de la base de données 15 et pour générer un signal codé numériquement dans l'espace de couleurs RVB (Rouge, Vert, Bleu) de façon à pouvoir afficher chaque image extraite sur l'écran 11 au moyen du pilote 3. Le signal généré par le producteur d'image 4 a des valeurs pour coder chaque niveau dans l'échelle de gris. Chaque niveau de gris est codé par exemple au moyen d'un mot de huit bits qui définit une même valeur d'intensité de lumière émise dans le rouge, le vert et le bleu. De façon connue, une même valeur d'intensité de lumière émise dans le rouge, le vert et le bleu est perçue par l'oeil humain avec une saturation nulle et une luminance selon une fonction croissante de la valeur d'intensité lumineuse sans perception de teinte. Huit bits permettent ainsi de coder $2^8$, soit 256 niveaux dans une échelle de gris. Un nombre plus important de bits permet de coder un nombre plus important de niveaux dans l'échelle de gris en variant suivant la puissance de deux correspondants.

Dans le système 1 conforme à l'invention, le signal généré par le producteur d'image 4, est fourni à trois amplificateurs 5, 6, 7, attribué chacun respectivement à une couleur Rouge, Vert, Bleu. La sortie de chaque amplificateur 5, 6, 7, communique au pilote d'affichage 3 une valeur d'intensité lumineuse à émettre respectivement dans le rouge, le vert et le bleu. A chaque amplificateur 5, 6, 7, est associé respectivement un dispositif à registres 8, 9, 10 qui contient au moins une valeur de seuil et deux groupes de paramètres de gains. Le dispositif à registres 8, 9, 10, reçoit en entrée le signal d'entrée de l'amplificateur 5, 6, 7 respectivement associé, de façon à piloter l'amplificateur auquel il est associé avec un gain résultant du premier groupe de paramètres lorsque le signal en entrée de l'amplificateur est inférieur à la valeur du seuil et avec un gain résultant du deuxième groupe de paramètres lorsque le signal en entrée de l'amplificateur est supérieur à ladite valeur de seuil.

Par exemple, chaque dispositif à registres contient deux valeurs de seuil g, h et six coefficients de fonctions linéaires a, b, c, d, e, f tels qu'une valeur y du signal en sortie de l'amplificateur associé soit déterminée par l'équation :

$$y = ax + b$$

pour un signal x en entrée de l'amplificateur inférieur à la première valeur de seuil g ;

$$y = cx + d$$

pour un signal x en entrée de l'amplificateur supérieur à la première valeur de seuil et inférieur à la seconde valeur de seuil h ;

$$y = ex + f$$

pour un signal x en entrée de l'amplificateur supérieur à la seconde valeur de seuil h.

Chacun des coefficients a, b, c, d, e, est positif, négatif ou nul. D'autre part, les amplificateurs 5, 6, 7 sont tels que le signal y en sortie est limité entre une valeur nulle et une valeur maximale d'intensité de lumière à émettre.

Dans le dispositif à registres 8, par exemple une valeur du premier seuil g à zéro a le même effet que s'il existait un seul seuil g à zéro avec un premier groupe de paramètres de gain c, d et un deuxième groupe de paramètres de gain e, f. Des valeurs nulles de coefficients e et f ont pour effet un gain constant à zéro pour des valeurs x du signal d'entrée supérieures à la valeur de seuil h. Une valeur nulle du coefficient d et une valeur du coefficient c égale à 255/h fait varier la valeur y du signal de sortie de 0 à 255 lorsque la valeur x du signal d'entrée varie de 0 à h.

L'interpréteur de commandes 2 est agencé pour charger des valeurs dans les dispositifs à registres 8, 9, 10, telles que les valeurs de seuil et de coefficients de fonction linéaire. Les valeurs chargées sont élaborées à partir des commandes et des données communiquées à l'interpréteur de commande depuis l'interface opérateur, par exemple au moyen du clavier 12 ou de la souris 13, l'interpréteur de commandes 2 reçoit alors aussi des composantes de l'image affichée sur l'écran 11 pour déterminer des coordonnées d'un pointeur de la souris sur l'écran.

Le producteur d'images 4 est aussi relié à un dispositif d'entrée sortie 14 pour permettre de charger une image d'empreinte digitale autre que celles déjà contenues dans la base de données 15.

L'interpréteur de commandes 2 est connecté au producteur d'images 4 de façon à générer des signaux d'images qui proviennent de la base de données 15 ou du dispositif d'entrée sortie 14, en réponse à des commandes communiquées par l'interface opérateur à l'interpréteur de commandes 2.

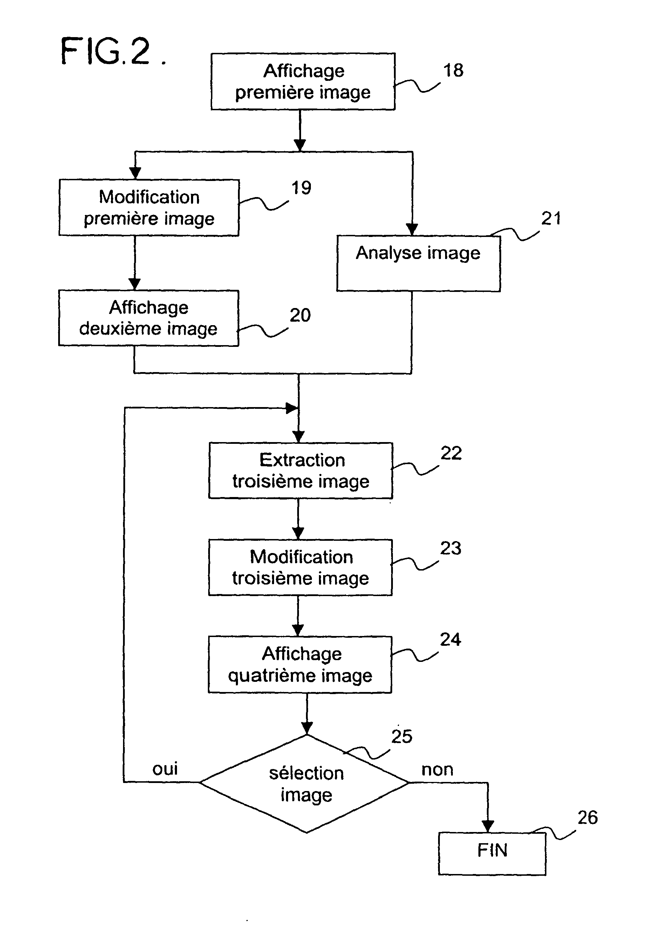

En référence à la figure 2, un procédé conforme à l'invention comprend une étape 18 dans laquelle une première image est affichée sur l'écran 11. La première image est celle d'une empreinte digitale d'identité inconnue communiquée au système 1 par le dispositif d'entrée sortie 14. Le spécialiste 16 commande au producteur d'image 4 de générer le signal qui code la première image. La première image résultant d'un relevé d'empreinte est généralement codée dans une échelle de gris. Initialement, les valeurs de seuil g, h et les valeurs de coefficients constants b, d, f sont toutes à zéro, les valeurs de coefficients multiplicateurs a, c, e sont toutes à un dans chacun des dispositifs à registres 8, 9, 10. Ainsi, le gain des amplificateurs 5, 6, 7 est unitaire et la première image d'empreinte digitale est présentée au spécialiste 16 telle que disponible avec différents niveaux dans une échelle de gris, par exemple dans une première fenêtre de l'écran 11.

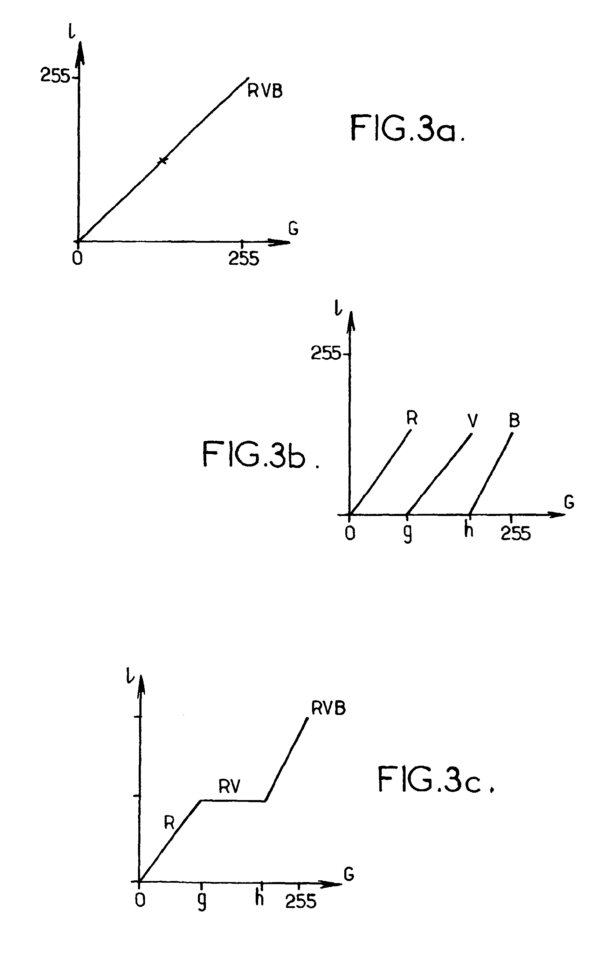

Dans une étape 19, le spécialiste 16 ouvre une deuxième fenêtre qui présente sous forme graphique ou textuelle, un paramétrage d'affichage d'image pour modifier la première image. En référence à la figure 3a, un exemple de deuxième fenêtre met en évidence le pouvoir séparateur de l'oeil pour une image codée sur une échelle de gris au moyen d'un mot de huit bits. En abscisse, les niveaux de gris vont de zéro pour le noir à 255 pour le blanc. En ordonnée, la luminance varie proportionnellement de zéro à 255. Chaque point de l'image codée se trouve sur une droite de coefficient directeur unitaire avec des valeurs identiques pour chaque composante de couleur Rouge, Vert, Bleu. Le pouvoir séparateur de l'oeil s'exerce selon une seule dimension de l'espace de couleur, à savoir la luminance. Au moyen de la souris ou du clavier, le spécialiste 16 peut modifier la courbe de la figure 3a pour obtenir des paramétrages différents de couleur tels que ceux représentés par exemple sur les figures 3b et 3c.

Sur la figure 3b, la composante rouge varie de zéro à 255 pour des niveaux de gris variant de zéro à 85, et retombe à zéro pour les niveaux de gris supérieurs au seuil g de valeur 85. La composante verte est nulle pour les niveaux de gris inférieurs au seuil g de valeur 85 ou supérieurs au seuil h de valeur 170. La composante verte varie de zéro à 255 pour des niveaux de gris variant de 85 à 170. La composante bleue est nulle pour les niveaux de gris inférieurs au seuil h de valeur 170 et varie de zéro à 255 pour les niveaux de gris variant de 170 à 255.

Sur la figure 3c, la composante rouge varie de zéro à 255 pour les niveaux de gris variant de zéro à 85, puis reste constante à 255 pour les niveaux de gris supérieurs à 85. La composante verte, nulle pour les niveaux de gris inférieurs à 85, varie de zéro à 255 pour les niveaux de gris variant de 85 à 170, puis reste constante à 255 pour les niveaux de gris supérieurs à 170. La composante bleue, nulle pour les niveaux de gris inférieurs à 170, varie de zéro à 255 pour les niveaux de gris supérieurs variant de 170 à 255.

Il convient de noter que lorsqu'une seule composante de couleur varie du minimum nul au maximum (ici 255) avec les deux autres composantes nulles, la luminance varie de zéro à une valeur médiane (ici 128), tel qu'on l'observe sur la figure 3b. Lorsqu'une composante de couleur varie du minimum nul au maximum (ici 255) avec une autre composante nulle et une autre composante à sa valeur maximale (255), la luminance reste constante à la valeur médiane (128) avec variation de la teinte.

En réponse aux modifications faites par le spécialiste 16 sur la courbe de la deuxième fenêtre au moyen de la souris ou du clavier, l'interpréteur de commande 2 charge les valeurs adéquates dans les dispositifs à registre 8, 9, 10.

Pour l'exemple de la figure 3b, l'interpréteur de commandes 2 charge les valeurs 85 et 170 pour les seuils respectivement g et h de chaque dispositif à registre 8, 9, 10. L'interpréteur de commandes 2 charge la valeur zéro pour les coefficients b, c, d, e, f du dispositif 8, pour les coefficients a, b, e, f du dispositif 9 et pour les coefficients a, b, c, d du dispositif 10. L'interpréteur de commandes 2 charge la valeur trois pour le coefficient a du dispositif 8, pour le coefficient c du dispositif 9 et pour le coefficient e du dispositif 10, la valeur -255 pour le coefficient d du dispositif 9 et la valeur - 510 pour le coefficient f du dispositif 10.

Dans l'exemple de la figure 3c, les valeurs chargées par l'interpréteur de commandes 2 sont identiques sauf pour les valeurs d, f du dispositif 8 et les valeurs f du dispositif 9 chargées à 255.

Le spécialiste peut agir à sa guise pour obtenir d'autres courbes modifiées que celles des figures 3b et 3c. L'homme du métier de l'informatique programme sans difficulté particulière l'interpréteur de commandes 2 pour transcrire sous forme de valeurs à charger dans les dispositifs 8, 9, 10 les commandes reçues de l'interface opérateur.

Ainsi, dans une étape 20, l'image d'empreinte digitale est affichée par exemple dans une troisième fenêtre avec les couleurs qui résultent de l'étape 19.

Les propriétés géométriques de l'image affichée dans la troisième fenêtre sont identiques à celles de l'image affichée dans la première fenêtre, seules sont modifiées les couleurs de cette image. L'image de la troisième fenêtre constitue simplement un affichage différent en couleurs de l'image de la première fenêtre. En particulier, des marques sur la première image pour repérer les points caractéristiques ont les mêmes coordonnées sur la deuxième image affichée dans la troisième fenêtre. Ces marques peuvent résulter d'un codage automatique de l'image d'empreinte inconnue par le producteur d'image 4 qui, recevant l'image d'empreinte inconnue du dispositif d'entrée sortie 14, dispose d'un logiciel de reconnaissance de discontinuité dans les échelles de gris.

L'étape 20 peut être exécutée simultanément avec l'étape 19 de façon à ce que le spécialiste puisse voir dans la troisième fenêtre les effets produits par les modifications qu'il apporte dans la deuxième fenêtre.

Dans le cas de la figure 3b, le spécialiste observe des zones variant du noir au rouge vif pour des zones de l'image d'origine qui varient du noir au gris foncé, des zones variant du noir au vert vif pour des zones de l'image d'origine qui varient du gris foncé au gris clair et des zones variant du noir au bleu vif pour des zones de l'image d'origine qui varient du gris clair au blanc.

Dans le cas de la figure 3c, le spécialiste observe des zones variant du noir au rouge vif pour des zones de l'image d'origine qui varient du noir au gris foncé, des zones variant du rouge vif au jaune vif en passant par les teintes orangées pour des zones de l'image d'origine qui varient du gris foncé au gris clair, des zones variant du jaune vif au blanc pour des zones de l'image d'origine qui varient du gris clair au blanc.

Le pouvoir séparateur de l'oeil humain est augmenté car la distinction entre les points de l'image ne se fait plus selon la seule dimension de luminance d'une échelle de gris mais selon deux dimensions teinte et luminance.

Ainsi, dans une étape 21 effectuée en parallèle ou indépendamment des étapes 19 et 20, le spécialiste 16 analyse plus facilement l'image affichée dans la troisième fenêtre pour déterminer les points caractéristiques de l'empreinte digitale.

Le spécialiste peut modifier l'espace des couleurs en cours d'analyse de façon à accentuer certains détails de l'image plus difficiles à apprécier. Bénéficiant d'un affichage dans un espace de couleurs bidimensionnel, luminance et teinte, le spécialiste place alors manuellement les marques qui repèrent les points caractéristiques avec une grande précision. Si des marques ont préalablement été placées par le producteur d'image 4 de façon automatique, le spécialiste les déplace au moyen par exemple de la souris 13 de façon à les positionner avec une grande précision. L'amélioration de la qualité du codage de l'image d'empreinte inconnue qui en résulte augmente les chances de reconnaissance automatique dans les étapes qui suivent.

Dans une étape 22, les points caractéristiques de l'empreinte digitale d'identité inconnue permettent au producteur d'images 4 d'extraire de la base de données 15, une troisième image que le producteur d'images 4 détecte avec des points caractéristiques semblables à ceux de l'empreinte digitale d'identité inconnue.

Dans une étape 23, la troisième image est modifiée par les amplificateurs 5, 6, 7 avec les paramètres conservés dans les dispositifs 8, 9, 10 en une quatrième image. Ceci permet d'homogénéiser les différentes visualisations d'image d'empreinte digitale.

Dans une étape 24, la quatrième image est affichée dans une quatrième fenêtre de sorte que le spécialiste puisse la comparer facilement avec l'image affichée dans la troisième fenêtre.

Dans une étape 25, si le spécialiste sélectionne la quatrième image comme étant celle d'une empreinte digitale identique à l'empreinte digitale d'identité inconnue, le procédé de reconnaissance se termine dans une étape 26. La base de données 15 contenant pour chaque troisième image, une identité d'individu associée à l'empreinte digitale, l'identité de l'empreinte digitale de la première image devient connue. Ici encore, la sélection par le spécialiste est facilitée par la représentation des images d'empreintes digitales qui, d'un mode d'affichage dans un espace de couleurs mono-dimensionnel, luminance sur une échelle de gris, est modifiée en un mode d'affichage dans un espace de couleurs bi-dimensionnel, teinte et luminance.

Si le spécialiste ne sélectionne pas la quatrième image comme étant celle d'une empreinte digitale identique à l'empreinte digitale de la deuxième image, le procédé est réitéré en étape 22 jusqu'à trouver une correspondance en étape 25.

Dans l'étape de modification du procédé décrit, un niveau de gris de la première image étant codé par trois valeurs identiques de trois composantes, rouge, vert, bleu, il est possible d'amplifier la valeur d'une première composante dans une première plage de gris et de l'annuler en dehors de ladite première plage de gris. Il est aussi possible d'amplifier une deuxième composante dans une deuxième plage de gris et de l'annuler en dehors de ladite deuxième plage de gris. Il est encore possible d'amplifier une troisième composante dans une troisième plage de gris et de l'annuler en dehors de ladite troisième plage de gris. Dans l'étape d'analyse, des marques pour repérer des points caractéristiques sont avantageusement placées sur ladite deuxième image qui représente une empreinte digitale inconnue. Dans l'étape d'itération, le paramétrage de chaque plage de gris, est avantageusement mémorisé de façon à être appliqué à plusieurs images d'empreintes digitales connues et comparées à l'image d'empreinte digitale inconnue.

Le système informatique précédemment décrit permet de distinguer une ou plusieurs images d'empreintes digitales grâce au producteur d'images d'empreintes digitales codées avec différents niveaux dans une échelle de gris et aux moyens pour modifier une première image reçue du producteur d'images en une deuxième image codée avec différents niveaux dans une échelle de teintes et différents niveaux dans une échelle de luminance, et pour communiquer ladite deuxième image au pilote d'affichage. Avantageusement, l'interpréteur de commandes permet de paramétrer lesdits moyens en fonction d'ordres reçus de l'interface opérateur de façon à amplifier une ou plusieurs composantes d'un niveau de gris dans un espace de couleurs saturées. Le producteur d'images permet aussi d'extraire de la base de données contenant des images d'empreintes digitales, une troisième image à destination des moyens de modification en réponse à un signal reçu de l'interpréteur de commande. Les moyens pour modifier la première ou la troisième image comprennent par exemple trois amplificateurs 5, 6, 7 pour amplifier chacun respectivement une composante de couleur fondamentale.

## Revendications

1. Procédé de reconnaissance d'empreintes digitales comprenant une étape (21) d'analyse dans laquelle un spécialiste analyse des points caractéristiques d'une image d'empreinte digitale de façon à pouvoir distinguer l'empreinte digitale dont l'image lui est présentée, procédé **caractérisé en ce qu'**il comprend une étape de modification (19) dans laquelle une première Image d'empreinte disponible avec différents niveaux dans une échelle de gris est modifiée en une deuxième image dans laquelle au moins une plage de gris de la première image est paramétrée de façon à être représentée avec différents niveaux dans une échelle de couleur.

2. Procédé de reconnaissance d'empreintes digitales selon la revendication 1, **caractérisé en ce que** dans l'étape de modification, un niveau de gris de la première Image étant codé par trois valeurs identiques de trois composantes, rouge, vert, bleu, la valeur d'une première composante est amplifiée dans une première plage de gris et annulée en dehors de ladite première plage de gris.

3. Procédé de reconnaissance d'empreintes digitales selon la revendication 2, **caractérisé en ce que** dans l'étape de modification, la valeur d'une deuxième composante est amplifiée dans une deuxième plage de gris et annulée en dehors de ladite deuxième plage de gris.

4. Procédé de reconnaissance d'empreintes digitales selon la revendication 3, **caractérisé en ce que** dans l'étape de modification, la valeur d'une troisième composante est amplifiée dans une troisième plage de gris et annulée en dehors de ladite troisième plage de gris.

**5.** Procédé de reconnaissance d'empreintes digitales selon l'une des revendications précédentes, **caractérisé en ce qu'**il comprend une étape d'analyse (21) dans laquelle des marques pour repérer des points caractéristiques sont placées sur ladite deuxième image qui représente une empreinte digitale inconnue.

**6.** Procédé de reconnaissance d'empreintes digitales selon la revendication 5, **caractérisé en ce qu'**il comprend une étape d'itération (22) dans laquelle le paramétrage de chaque plage de gris, est mémorisé de façon à être appliqué à plusieurs images d'empreintes digitales connues et comparées à l'image d'empreinte digitale inconnue.

**7.** Système informatique pour distinguer une ou plusieurs images d'empreintes digitales, comprenant un pilote d'affichage (3) pour présenter une image d'empreinte digitale sur un écran (11) à un spécialiste (16), **caractérisé en ce qu'**il comprend :

    - un producteur d'images (4) d'empreintes digitales codées avec différents niveaux dans une échelle de gris,
    - des moyens (5,6,7,8,9,10) pour modifier une première image reçue du producteur d'images (4) en une deuxième image codée avec différents niveaux dans une échelle de teintes et différents niveaux dans une échelle de luminance, et pour communiquer ladite deuxième image au pilote d'affichage (3) ; et **en ce qu'**il comprend un interpréteur de commandes (2) pour paramétrer les moyens (5 à 10) en fonction d'ordres reçus d'une interface opérateur (12, 13) de façon à amplifier une ou plusieurs composantes d'un niveau de gris dans un espace de couleurs saturées.

**8.** Système informatique selon la revendication 8, **caractérisé en ce qu'**il comprend une base de données (15) contenant des Images d'empreintes digitales dont le producteur d'images extrait une troisième images destination des moyens de modification (5 à 10) en réponse à un signal reçu de l'interpréteur de commande (2).

**9.** Système informatique selon l'une des revendications 7 à 8, **caractérisé en ce que** les moyens (5,6,7,8,9,10) pour modifier la première ou la troisième image comprennent trois amplificateurs (5, 6, 7) pour amplifier chacun respectivement une composante de couleur fondamentale.

**Claims**

**1.** Method of recognizing fingerprints comprising a step (21) of analysing where an expert analyses characteristic points of a fingerprint image in order to be able to differentiate the fingerprint for which the image is presented;
said method **characterised in that** it comprises a step of modifying(19) where a first fingerprint available with various levels from a grey scale is modified into a second image wherein at least one grey range of the first image is parameterized so as to be represented with various levels from a colour scale.

**2.** Method of recognizing fingerprints according to claim 1, **characterized in that** in the step of modifying, a grey level of the first image is encoded by three identical values of three components, red, green and blue, the value of a first component is amplified in a first grey range and cancelled outside the said first grey range.

**3.** Method of recognizing fingerprints according to claim 2, **characterized in that**, in the step of modifying, the value of a second component is amplified in a second grey range and cancelled outside the said second grey range.

**4.** Method of recognizing fingerprints according to claim 3, **characterized in that**, in the step of modifying, the value of a third component is amplified in a third grey range and cancelled outside the said third grey range.

**5.** Method of recognizing fingerprints according to any one of the previous claims, **characterised in that** it comprises a step of analysing (21) wherein markers for identifying characteristic points are placed on the said second image which represents an unknown fingerprint.

**6.** Method of recognizing fingerprints according to Claim 5, **characterized in that** it comprises an iteration step (22) wherein the parameterization of each grey range is stored so as to be applied to several known fingerprint images and compared with the unknown fingerprint image.

**7.** Computer system for differentiating one or more fingerprint images, comprising a display driver (3) in order to present a fingerprint image on a screen (11) to an expert (16),

    - a producer (4) of fingerprint images encoded with various levels from a grey scale,
    - means (5, 6, 7, 8, 9, 10) for modifying a first image received from the image producer (4) into a second image encoded with various levels from a hue scale and various levels from a brightness scale, and for communicating the said second image to the display driver (3), and in that it comprises a command interpreter (2) in order to parameterize the means (5 to 10) according to instructions received from an operator interface (12, 13) so as to amplify one or more components of a grey level in a saturated colour space.

8. Computer system according to claim 7, **characterised in that** it comprises a database (15) containing fingerprint images, from which the image producer extracts a third image intended for the modification means (5 to 10) in response to a signal received from the command interpreter (2).

9. Computer system according to any one of claims 7 to 8, **characterised in that** the means (5 to 10) for modifying the first or the third image comprise three amplifiers (5,6,7) in order for each one to respectively amplify a fundamental colour component.

**Patentansprüche**

1. Verfahren zur Erkennung von Fingerabdrücken, umfassend einen Analyseschritt (21), bei dem ein Spezialist charakteristische Punkte eines Fingerabdruckbildes derart analysiert, dass er den Fingerabdruck unterscheiden kann, dessen Bild man ihm präsentiert, wobei das Verfahren **dadurch gekennzeichnet ist, dass** es einen Modifikationsschritt (19) umfasst, in dem ein erstes Abdruckbild, das über verschiedene Niveaus auf einer Graustufenleiter verfügt, zu einem zweiten Bild modifiziert wird, indem zumindest ein Graubereich des ersten Bildes derart parametrisiert wird, dass es mit verschiedenen Niveaus auf einer Farbskala repräsentiert wird.

2. Erkennungsverfahren für Fingerabdrücke gemäß Anspruch 1, **dadurch gekennzeichnet, dass** im Modifikationsschritt, wobei ein Grau-Niveau des ersten Bildes durch drei identische Werte aus drei Komponenten, Rot, Grün, Blau codiert ist, der Wert einer ersten Komponente in einem ersten Graubereich verstärkt wird und außerhalb des besagten ersten Graubereichs annulliert wird.

3. Erkennungsverfahren für Fingerabdrücke gemäß Anspruch 2, **dadurch gekennzeichnet, dass** im Modifikationsschritt der Wert einer zweiten Komponente in einem zweiten Graubereich verstärkt wird und außerhalb des besagten zweiten Graubereichs annulliert wird.

4. Erkennungsverfahren für Fingerabdrücke gemäß Anspruch 3, **dadurch gekennzeichnet, dass** im Modifikationsschritt der Wert einer dritten Komponente in einem dritten Graubereich verstärkt wird und außerhalb des besagten dritten Graubereichs annulliert wird.

5. Erkennungsverfahren für Fingerabdrücke gemäß einem der vorstehenden Ansprüche, **dadurch gekennzeichnet, dass** es einen Analyseschritt (21) umfasst, in dem Markierungen zum Auffinden von charakteristischen Punkten auf dem zweiten Bild platziert sind, das einen unbekannten Fingerabdruck repräsentiert.

6. Erkennungsverfahren für Fingerabdrücke gemäß Anspruch 5, **dadurch gekennzeichnet, dass** es einen Iterationsschritt (22) umfasst, in welchem die Parametrisierung jedes Grau-Niveaus derart gespeichert wird, dass sie auf mehrere bekannte Fingerabdruckbilder anwendbar ist, und mit dem unbekannten Fingerabdruckbild verglichen wird.

7. Informationssystem zum Unterscheiden eines oder mehrerer Fingerabdruckbilder, umfassend einen Anzeigetreiber (3), um ein Fingerabdruckbild auf einen Bildschirm (11) einem Spezialisten (16) zu präsentieren, **dadurch gekennzeichnet, dass** es umfasst:

    - einen Bildgeber (4) von Fingerabdrücken, die mit unterschiedlichen Niveaus in einer Grauskala codiert sind,
    - Mittel (5, 6, 7, 8, 9, 10) zum Modifizieren eines vom Bildgeber (4) empfangenen ersten Bildes zu einem zweiten Bild, das mit unterschiedlichen Niveaus in einer Farbskala und unterschiedlichen Niveaus in einer Luminanzskala codiert ist, und zum Kommunizieren des zweiten Bildes an den Anzeigetreiber (3); und dadurch, dass es einen Befehlsinterpreter (2) zum Parametrisieren der Mittel (5 bis 10) abhängig von, von einer Bedien-Schnittstelle (12, 13) empfangenen Befehlen der Art, dass ein oder mehrere Komponenten eines Grau-Niveaus in einem gesättigten Farbraum verstärkt werden, umfasst.

8. Informationssystem gemäß Anspruch 7, **dadurch gekennzeichnet, dass** es eine Datenbank (15) umfasst, die Fingerabdruckbilder enthält, aus denen der Bildgeber ein drittes Zielbild mit dem Ziel der Modifikationsmittel (5 bis 10) in Reaktion auf ein vom Befehlsinterpreter (2) empfangenes Signal extrahiert.

9. Informationssystem gemäß einem der Ansprüche 7 bis 8, **dadurch gekennzeichnet, dass** die Mittel (5, 6, 7, 8, 9, 10) zum Modifizieren des ersten oder dritten Bildes drei Verstärker (5, 6, 7) zum Verstärken jeder entsprechenden Komponente der Basisfarbe umfassen.

FIG.1.

# FIG.2 .

```
Affichage
première image          18
```

```
Modification
première image          19
```

```
Analyse image           21
```

```
Affichage
deuxième image          20
```

```
Extraction
troisième image         22
```

```
Modification
troisième image         23
```

```
Affichage
quatrième image         24
```

oui    sélection image    25    non

```
FIN                     26
```

FIG.3a.

FIG.3b.

FIG.3c.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5194746 A